Europäisches Patentamt

European Patent Office

Office européen des brevets

(19)

(11) Numéro de publication: **0 108 000**
**B1**

(12) **FASCICULE DE BREVET EUROPEEN**

(45) Date de publication du fascicule du brevet:
02.04.86

(51) Int. Cl.⁴: **B 60 K 5/12,** F 16 F 15/08

(21) Numéro de dépôt: 83402016.6

(22) Date de dépôt: 17.10.83

(54) Dispositif anti-basculement pour groupe moto-propulseur de véhicule automobile.

(30) Priorité: 27.10.82 FR 8217988
01.04.83 FR 8305455

(43) Date de publication de la demande:
09.05.84 Bulletin 84/19

(45) Mention de la délivrance du brevet:
02.04.86 Bulletin 86/14

(84) Etats contractants désignés:
DE GB IT

(56) Documents cités:
EP - A - 0 038 547
DE - C - 741 447
FR - A - 782 906
FR - A - 979 048
FR - A - 1 158 530
FR - A - 2 322 304
FR - A - 2 363 033
FR - A - 2 487 740
GB - A - 617 552
GB - A - 777 226
US - A - 1 941 763
US - A - 2 063 063
US - A - 2 648 510
US - A - 3 730 509

(73) Titulaire: AUTOMOBILES PEUGEOT, 75, avenue de la
Grande Armée, F-75116 Paris (FR)
Titulaire: AUTOMOBILES CITROEN, 62 Boulevard
Victor-Hugo, F-92200 Neuilly-sur-Seine (FR)

(72) Inventeur: Le Salver, Robert, Rue des Coteaux,
F-78570 Chanteloup les Vignes (FR)
Inventeur: Poupard, Dominique, 8 Route du Pavé des
Gardes, F-92370 Chaville (FR)

(74) Mandataire: Moncheny, Michel et al, c/o Cabinet
Lavoix 2 Place d'Estienne d'Orves, F-75441 Paris
Cedex 09 (FR)

ACTORUM AG

## Description

La présente invention a pour objet un dispositif antibasculement pour un groupe motopropulseur de véhicule automobile suspendu élastiquement à la structure du véhicule.

Comme on le sait, ce genre de dispositif comprend une butée de faible flexibilité interposée avec un faible espacement suivant une direction perpendiculaire à l'axe de rotation du groupe motopropulseur, entre des éléments d'appui liés respectivement au groupe et à la structure.

L'invention s'applique tout particulièrement à un groupe motopropulseur comprenant un coupleur hydrocinétique, une boîte de vitesses et un arbre de sortie d'axe parallèle à l'axe de rotation du moteur.

La suspension élastique d'un groupe motopropulseur sur la structure d'un véhicule automobile comporte généralement, en plus de supports recevant la charge statique de ce groupe, un dispositif à une ou plusieurs butées qui limite son basculement autour d'un axe parallèle à son arbre de sortie. Ce basculement tend à se produire dans un sens ou dans l'autre selon que le couple exercé par le groupe sur l'arbre de sortie est dirigé dans le sens correspondant à la marche avant ou à la marche arrière du véhicule. C'est pourquoi le dispositif antibasculement comporte au moins une butée de marche avant et une butée de marche arrière.

Lorsque l'arbre de sortie est coaxial ou parallèle à l'axe de rotation du moteur, notamment à l'axe du vilebrequin dans le cas d'un moteur à combustion interne à pistons alternatifs, les éventuelles vibrations angulaires du moteur autour de son axe sont susceptibles d'être transmises à la structure du véhicule par ces butées. Pour éviter cet inconvénient, qui en pratique n'est sensible que lorsque le moteur tourne au ralenti, il est habituel d'espacer légèrement chacune de ces butées de l'un des éléments d'appui liés, respectivement, au groupe et à la structure, et entre lesquels elle est interposée. De cette façon, lorsque aucun couple n'est transmis par le groupe à l'arbre de sortie, en particulier parce que la boîte de vitesses est en position neutre ou point mort, ou parce qu'un dispositif que comporte le groupe est débrayé, les faibles oscillations angulaires du groupe, dues aux vibrations du moteur, s'effectuent sans intervention des butées, donc sans transmission de vibrations à la structure.

Cependant, lorsque le dispositif d'accouplement est du type hydrocinétique, un certain couple de traînée est transmis en permanence du moteur à la boîte de vitesses. Ainsi, lorsque le véhicule est à l'arrêt, moteur tournant au ralenti, donc susceptible de vibrer, et la boîte de vitesses engagée sur un rapport de marche avant ou arrière, comme c'est le cas fréquemment en circulation urbaine, le couple de traînée tend à faire basculer le groupe dans un sens, provoquant la mise en contact de la butée correspondante. Celle-ci transmet alors à la structure les vibrations du moteur avec un filtrage insuffisant, car elle possède une faible flexibilité pour pouvoir s'opposer efficacement au basculement du groupe lors des fortes charges appliquées au moteur.

Dans la demande de brevet français FR-A-2 487 740, il a déjà été proposé, pour résoudre ce problème, une solution dans laquelle, à la butée normale antibasculement, est associée une butée auxiliaire de grande flexibilité comprenant une chambre extensible reliée à une source de fluide sous pression, au moins lorsque le moteur est au ralenti avec un rapport de marche engagé dans la boîte de vitesses.

L'invention a pour but d'obtenir le même résultat par des moyens plus simples et par conséquent moins onéreux, en évitant notamment le recours à un fluide sous pression.

Le dispositif antibasculement visé par l'invention comprend, selon le préambule de la revendication 1, des butées de marche arrière et de marche avant, de faible flexibilité, interposées dans une direction perpendiculaire à l'axe de rotation du groupe, chacune entre deux éléments d'appui dont l'un est lié à un support faisant partie du groupe motopropulseur, et l'autre à un support faisant partie de la structure.

Conformément à l'invention, telle que caractérisée dans la revendication 1, l'un des éléments d'appui d'au moins une des butées est monté mobile par rapport à son support et maintenu écarté de celui-ci d'une distance déterminée, dans une direction perpendiculaire à l'axe de rotation du groupe, au moyen d'un organe élastique précontraint de grande flexibilité dont une extrémité est solidaire du support par rapport auquel ledit élément d'appui est monté mobile.

De ce fait, si l'élément d'appui de la butée de marche avant est mobile par rapport à son support et maintenu écarté de celui-ci par l'organe élastique précontraint, et si la boîte de vitesses est engagée sur un rapport de marche avant, l'organe élastique précontraint exerce sur la butée une force antagoniste à celle résultant du basculement du groupe motopropulseur, cette force antagoniste étant légèrement inférieure à l'effort supporté par la butée, de telle sorte que la distance (ou jeu) précitée ne soit pas rattrapée. Dans ces conditions, les vibrations du groupe sont filtrées par l'organe élastique de grande flexibilité et ne sont donc pas transmises à la structure du véhicule.

Suivant une forme de réalisation de l'invention, dans laquelle le groupe motopropulseur est suspendu à un support placé en appui sur une cale élastique de grande flexibilité, supportée par la structure, l'une des butées, par exemple la butée de marche avant, est fixée sur un élément d'appui solidaire d'une vis traversant le support et qui est élastiquement sollicitée vers l'élément d'appui opposé de la butée par un ressort précontraint constituant ledit organe élastique, par exemple à lame, dont une extrémité est fixée à la structure et tend à maintenir normalement l'élément d'appui écarté du support d'une distance égale à la distance précitée.

Ainsi, lorsque la boîte de vitesses est sur un rapport de marche avant et que par conséquent le support du groupe motopropulseur bascule et exerce un effort sur la butée, celle-ci se rapproche de son support faisant partie de la structure, de sorte que le jeu diminue mais n'est pas annulé, tant que le véhicule est arrêté. La lame élastique constituant le ressort précontraint s'oppose en effet à ce que la butée vienne en appui sur son support.

Suivant une particularité de l'invention, des plots élastiques sont fixés sur la face de l'élément d'appui de la butée tournée vers le support avec, entre ces plots et ledit organe, la distance (ou jeu) précitée, et un écrou ainsi qu'une pièce élastique telle qu'une rondelle sont interposés entre le ressort et le support, de manière que l'écrou reste appliqué contre la rondelle par le ressort précontraint, tant que l'effort de basculement supporté par la butée est inférieur à la force de précontrainte antagoniste du ressort.

Lorsque les couples exercés sur la butée par le basculement du groupe motopropulseur deviennent plus importants, au cours du roulement du véhicule, les plots élastiques viennent alors en appui sur le support de la butée, qui stoppe le basculement du groupe motopropulseur de la façon habituelle.

Suivant une forme de réalisation avantageuse, l'organe élastique précontraint de grande flexibilité est un ressort à lame repliée en forme d'épingle à cheveux, dont une branche est fixée sur l'un des supports et dont l'autre branche constitue un élément d'appui de l'une des butées, par exemple la butée de marche avant, et un organe d'entretoisement assure le rapprochement des deux branches du ressort afin de créer la précontrainte, ledit élément d'appui étant maintenu à une distance prédéterminée de son support.

De préférence, le support sur lequel est fixé le ressort est le support faisant partie du groupe motopropulseur.

D'autres particularités et avantages de l'invention apparaîtront au cours de la description qui va suivre, faite en référence aux dessins annexés qui en illustrent deux exemples de réalisation non limitatifs.

La fig. 1 est une vue schématique en élévation latérale d'un groupe motopropulseur équipé d'un dispositif antibasculement selon l'invention.

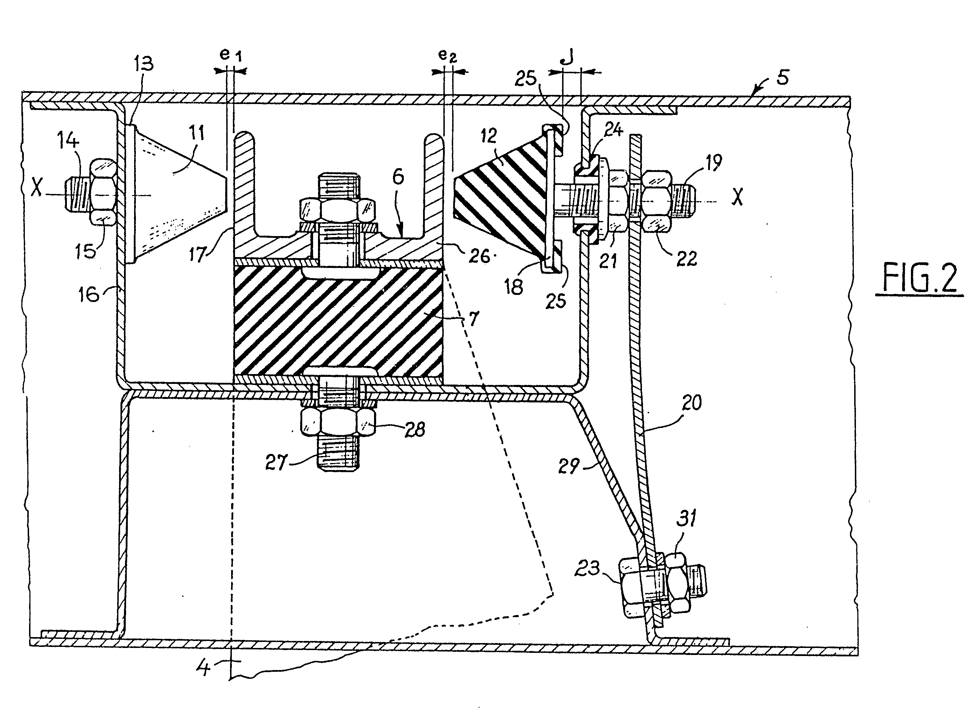

La fig. 2 est une vue mi-coupe mi-élévation à échelle agrandie du dispositif antibasculement de la fig. 1.

La fig. 3 est un diagramme illustrant le fonctionnement du dispositif antibasculement.

La fig. 4 est une vue en élévation, avec coupe partielle, d'un second mode de réalisation du dispositif selon l'invention.

La fig. 5 est une section selon la ligne V-V de la fig. 4.

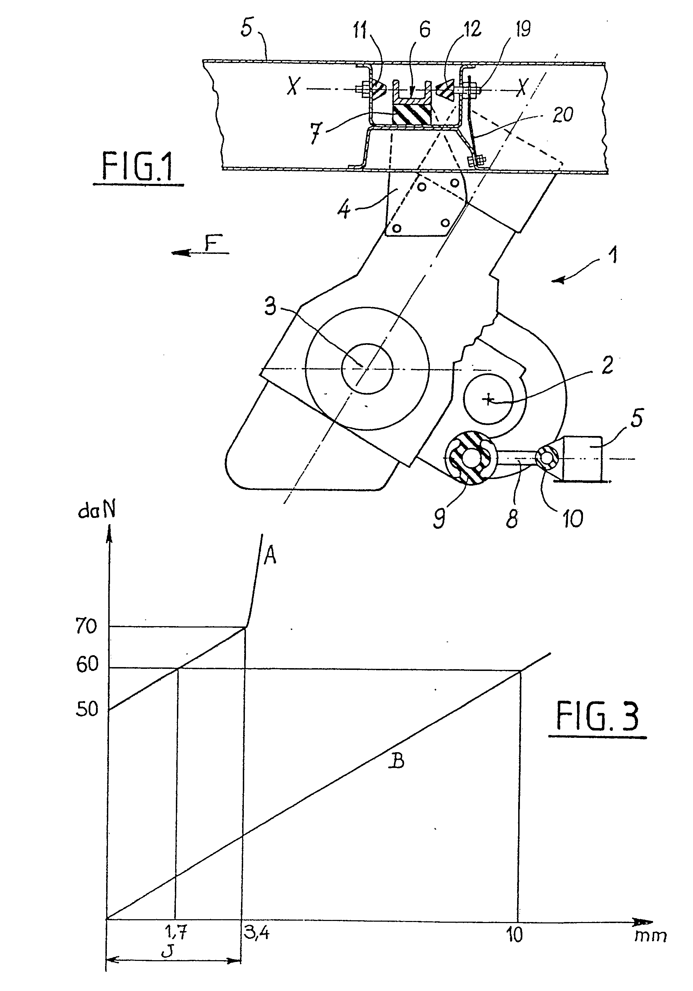

On voit schématiquement à la fig. 1 un groupe motopropulseur 1 comprenant un moteur à combustion interne à pistons alternatifs, relié par un dispositif d'accouplement hydrocinétique tel qu'un convertisseur de couple, à une boîte de vitesses automatique dont l'arbre de sortie 2 est sensiblement parallèle à l'axe 3 de rotation du vilebrequin du moteur.

Ce groupe motopropulseur peut être notamment à moteur diesel équipant un véhicule à traction avant, ce groupe étant monté transversalement par rapport à la direction d'avancement F du véhicule.

Une console 4, fixée à la partie supérieure du groupe motopropulseur 1, transmet la charge statique de ce dernier à la structure 5 du véhicule, par l'intermédiaire d'un support 6 et d'une cale élastique 7 de grande flexibilité suivant une direction horizontale orthogonale à l'axe 3. La cale 7 repose sur le fond d'un support 16 faisant partie de la structure 5, auquel elle est fixée par des tiges filetées et des écrous tels que la tige 27 et l'écrou 28. La partie inférieure du groupe 1 est reliée à la structure 5, de façon connue en soi, par une biellette 8 et deux articulations élastiques 9, 10.

De part et d'autre du support 6, et suivant une direction horizontale X-X orthogonale à l'axe 3, sont disposées deux butées antibasculement, à savoir une butée 11 pour la marche arrière, et une butée 12 pour la marche avant.

La butée 11 de marche arrière est fixée de manière connue sur un élément d'appui 13 solidaire d'une vis 14 permettant sa fixation par un écrou 15 sur le support 16 faisant partie de la structure 5. La butée 11 est disposée à une faible distance $e_1$ d'un élément d'appui 17 appartenant au support 6.

La butée 12 de marche avant est fixée sur un élément d'appui 18 solidaire d'une vis 19 qui traverse le support 16 ainsi qu'un organe élastique précontraint, constitué dans cet exemple par un ressort à lame 20, sur lequel elle est fixée entre deux écrous 21, 22. Le ressort 20 est fixé par son extrémité opposée à la vis 19, sur une partie 29 de la structure 5, au moyen d'un système boulon 23/écrou 31. Le ressort 20 présente une grande flexibilité et est monté précontraint, de manière à plaquer l'écrou 21 contre une rondelle élastique 24 fixée sur le support 16, coaxialement à la vis 19.

D'autre part, des plots élastiques 25 sont fixés sur la face de l'élément d'appui 18 de la butée 12 tournée vers le support 16, de façon qu'entre ces plots 25 et le support 16 soit réservé un jeu J, mesuré suivant la direction X-X, tant que l'écrou 21 reste appliqué contre la rondelle 24 par le ressort 20. Par ailleurs, un jeu $e_2$ apparaît entre la butée 12 et un élément d'appui 26 appartenant au support 6.

Ainsi, dans cet exemple de réalisation du dispositif antibasculement visé par l'invention, l'élément d'appui 18 de la butée de marche avant 12 est monté mobile par rapport à son support 16, et maintenu écarté de celui-ci de la distance prédéterminée J dans une direction perpendiculaire à l'axe de rotation 3 du groupe 1, et ce au moyen du ressort précontraint 20 de grande flexibilité.

Le fonctionnement du dispositif antibasculement qui vient d'être décrit est le suivant:

Lorsque la boîte de vitesses est en position neutre, le groupe motopropulseur 1 ne transmet aucun couple sur l'arbre de sortie 2. Celui-ci ne tend donc pas à basculer, et les jeux $e_1$, $e_2$ lui permettent d'osciller librement, avec une très faible amplitude, sans mise en contact des éléments d'appui 17 ou 26 avec, respectivement, les butées 11 ou 12. De cette façon, les vibrations du moteur, convenablement filtrées par la cale porteuse 7, ne sont pas transmises à la structure 5, notamment au ralenti.

Lorsque la boîte de vitesses est engagée sur un rapport de marche avant, le coupleur hydraulique assure en permanence l'accouplement, par glissement de fluide, entre le moteur et la boîte de vitesses. Le groupe 1 transmet donc sur l'arbre de sortie 2, tant que le véhicule est arrêté, un couple de traînée qui tend à faire avancer le véhicule. Par réaction, le groupe 1 tend à basculer en sens inverse et l'élément d'appui 26 vient porter sur la butée 12.

La force de précontrainte exercée par le ressort 20 étant légèrement inférieure à l'effort supporté par la butée 12, dans les conditions ci-dessus, l'écrou 21 est écarté de la rondelle 24 sans toutefois que le jeu J soit rattrapé. Les vibrations du groupe 1 sont alors filtrées par le ressort 20 de grande flexibilité.

Pour des couples plus importants, rencontrés au cours du roulement, les plots élastiques 25 viennent en appui sur le support 16 du fait que la force de précontrainte du ressort 20 devient inférieure à l'effort transmis à la butée 12 par le support 6. La butée 12 stoppe alors le basculement du groupe motopropulseur 1 de la façon habituelle.

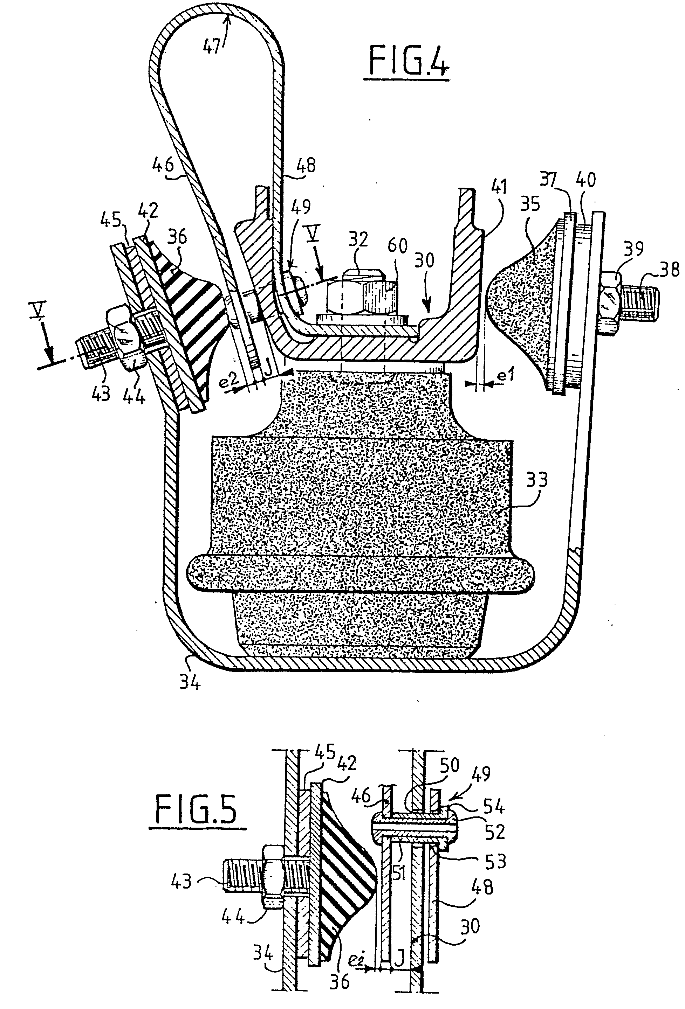

Le diagramme de la fig. 3 permet d'illustrer ce fonctionnement au moyen d'un exemple numérique.

Sur ce diagramme, la courbe A représente la loi force/déplacement suivant l'axe X-X, la force étant en ordonnées et le déplacement (en millimètres) en abscisses. Dans sa première partie, correspondant au rattrapage du jeu J, soit 3,4 mm, la raideur est très faible; cette raideur est celle du ressort 20, soit 6 daN/mm. Lorsque le jeu J est rattrapé, la raideur devient très forte du fait que c'est celle de la butée 12 proprement dite.

L'effort de précontrainte du ressort 20 est de 50 daN. Le moteur tournant au ralenti et un rapport de marche avant étant engagé dans la boîte de vitesses, l'effort exercé par le groupe motopropulseur 1 sur la butée 12 est 60 daN. Dans ces conditions, on voit que la déflexion moyenne au droit de la butée 12 est d'environ 1,7 mm. Si l'on voulait, avec une butée élastique classique, avoir la même raideur de 6 daN/mm pour le même effort de 60 daN, on aurait une déflexion de 10 mm (courbe B). Cela présenterait alors les inconvénients suivants:

— oscillations longitudinales gênantes lors des inversions de couple;

— contraintes élevées sur la cale porteuse 7;

— risques accrus de contact entre groupe motopropulseur 1 et structure 5.

Par conséquent, le dispositif antibasculement selon l'invention permet de réaliser une butée antibasculement qui possède une grande flexibilité dans la zone de charge correspondant au couple de traînée au ralenti, sans présenter l'inconvénient d'un débattement élevé pour cette charge.

Le second mode de réalisation, illustré aux fig. 4 et 5, comporte un support 30 solidaire d'un groupe motopropulseur non représenté fixé par un écrou 60 sur une vis 32 solidaire d'une cale élastique 33, elle-même fixée de manière habituelle sur un support 34 appartenant à la structure du véhicule.

De part et d'autre du support 20 sont disposées deux butées antibasculement, à savoir une butée 35 pour la marche arrière et une butée 36 pour la marche avant.

La butée 35 de marche arrière est fixée de manière connue sur un élément d'appui 37 solidaire d'une vis 38 permettant sa fixation, par un écrou 39, sur le support 34. Une cale de réglage 40, interposée entre l'élément d'appui 37 et le support 34, permet d'ajuster à une valeur prédéterminée $e_1$ la distance qui sépare la butée 35 d'un élément d'appui 41 appartenant au support 30.

De la même manière, la butée 36 de marche avant est fixée sur un élément d'appui 42 solidaire d'une vis 43 permettant sa fixation, par un écrou 44, sur le support 34. Une cale de réglage 45, interposée entre l'élément d'appui 42 et le support 34, permet d'ajuster à une valeur prédéterminée $e_2$ la distance qui sépare la butée 36 d'un élément d'appui 46. Ce dernier est constitué par une branche d'un ressort à lame 47 replié en forme d'épingle à cheveux. La deuxième branche 48 de ce ressort à lame est fixée sur le support 30 au moyen de l'écrou 60.

Les deux branches 46, 48 du ressort 47 sont reliées par un organe d'entretoisement 49 qui traverse librement le support 30, dans un perçage 50 (fig. 4). L'organe 49 représenté en détail sur la fig. 4 comprend un manchon 51 fixé sur la branche 46 par un rivet 52. Ce manchon traverse librement la branche 48, par un orifice 53, et comporte un épaulement 54 d'arrêt maintenu en appui contre cette branche 48 par l'élasticité du ressort 47. Dans cette position, un jeu J est ménagé entre la branche 46 constituant un élément d'appui pour la butée 36 et le support 30.

Le dispositif qui vient d'être décrit fonctionne comme le précédent.

Il présente l'avantage d'être plus simple, donc moins coûteux, et d'être plus facilement adaptable sur différentes configurations de suspensions de groupes motopropulseurs.

L'invention n'est pas limitée aux modes de réalisation représentés et peut comporter des variantes d'exécution, notamment les suivantes:

— La butée 12 peut être fixée indifféremment sur l'élément d'appui 18 lié à la structure, ou sur l'élément d'appui 26 lié au groupe motopropulseur.

— L'élément d'appui mobile par rapport à son support peut être indifféremment l'élément d'appui 18 lié à la structure 5 ou l'élément d'appui 26 lié au groupe moteur.

Dans ce cas, l'élément d'appui 26 est maintenu écarté d'une distance prédéterminée J du support 6 par un ressort précontraint dont une extrémité est fixée sur ce support 6.

— Il est possible d'adopter pour la butée 11 de marche arrière le même dispositif que celui décrit ci-dessus pour la butée 12 de marche avant.

— Le ressort 20 peut être de toute autre forme que celle représentée, un ressort à lame tel que décrit présentant toutefois l'avantage d'assurer le guidage de l'élément d'appui 18.

## Revendications

1. Dispositif antibasculement pour un groupe motopropulseur (1) de véhicule automobile suspendu élastiquement à la structure (5) du véhicule, comprenant des butées (11, 12) de marche arrière et de marche avant, de faible flexibilité, interposées dans une direction perpendiculaire à l'axe de rotation (3) du groupe, chacune entre deux éléments d'appui (13, 17, 18, 26) dont l'un (17, 26) est lié à un support (6) faisant partie du groupe motopropulseur (1) et l'autre (13, 18) à un support (16) faisant partie de la structure (5), caractérisé en ce que l'un (18) des éléments d'appui d'au moins une (12) des butées (11, 12) est monté mobile par rapport à son support (16) et maintenu écarté de celui-ci d'une distance déterminée (J), dans une direction perpendiculaire à l'axe de rotation (3) du groupe (1), au moyen d'un organe élastique précontraint (20) de grande flexibilité dont une extrémité est solidaire du support (16) par rapport auquel ledit élément d'appui (18) est monté mobile.

2. Dispositif selon la revendication 1, dans lequel le groupe motopropulseur (1) est suspendu par un support (6) placé en appui sur une cale élastique (7) de grande flexibilité, supportée par la structure (5), caractérisé en ce que l'une (12) des butées (11, 12), par exemple la butée (12) de marche avant, est fixée sur un élément d'appui (18) solidaire d'une vis (19) traversant le support (16) et qui est élastiquement sollicitée vers l'élément d'appui (26) opposé de la butée (12) par un ressort précontraint (20) constituant ledit organe élastique, dont une extrémité est fixée à la structure (5), et qui tend à maintenir normalement l'élément d'appui (18) écarté du support (16) d'une distance sensiblement égale à la distance précitée (J).

3. Dispositif selon la revendication 2, caractérisé en ce que des plots élastiques (25) sont fixés sur la face de l'élément d'appui (18) de la butée (12) tournée vers le support (16) avec, entre ces plots (25) et ledit support (16), la distance précitée (J), et un écrou (21) est monté sur la vis (19) entre le ressort (20) et le support (16) sur lequel est fixée une rondelle élastique (24), de manière que l'écrou (21) soit plaqué sur le support (16) par le ressort précontraint (20) tant que l'effort de basculement supporté par la butée (12) est inférieur à la force de précontrainte du ressort (20).

4. Dispositif selon l'une des revendications 2 ou 3, caractérisé en ce que ledit organe élastique précontraint est un ressort à lame.

5. Dispositif selon la revendication 1, caractérisé en ce que l'organe élastique précontraint (47) de grande flexibilité est un ressort à lame repliée en forme d'épingle à cheveux, dont une branche (48) est fixée sur l'un (30) des supports (30, 34) et dont l'autre branche (46) constitue un élément d'appui de l'une des butées (35, 36), par exemple la butée (36) de marche avant, et un organe d'entretoisement (49) assure le rapprochement des deux branches (46, 48) du ressort (47) afin de créer la précontrainte, ledit élément d'appui (46) étant maintenu à une distance prédéterminée (J) de son support (30).

6. Dispositif selon la revendication 5, caractérisé en ce que le support sur lequel est fixé le ressort précontraint (47) est celui (30) qui est solidaire du groupe motopropulseur.

7. Dispositif selon la revendication 5, caractérisé en ce que l'organe d'entretoisement (49) comporte un manchon (51) fixé sur la branche (46) formant l'élément d'appui de la butée associée (36) et qui traverse librement la seconde branche (48) du ressort (47), ce manchon (51) étant pourvu d'un épaulement (54) d'arrêt prenant appui sur la seconde branche (48) et qui est maintenu en appui sur cette dernière par la précontrainte élastique du ressort (47).

## Patentansprüche

1. Anti-Kippvorrichtung für ein Antriebsaggregat (1) eines Kraftfahrzeuges, das elastisch an der Tragkonstruktion (5) des Fahrzeugs aufgehängt ist, umfassend Rückwärtsgang- und Vorwärtsgang-Anschläge (11, 12) mit geringer Flexibilität, die in einer zur Drehachse (3) des Aggregats senkrechten Richtung, jeweils zwischen zwei Halteelementen (13, 17, 18, 26) eingefügt sind, von denen eines (17, 26) mit einem einen Teil des Antriebsaggregats (1) bildenden Träger (6) und das andere (13, 18) mit einem einen Teil der Tragkonstruktion (5) bildenden Träger (16) verbunden ist, dadurch gekennzeichnet, dass eines (18) der Halteelemente zumindest eines (12) der Anschläge (11, 12) beweglich in bezug auf seinen Träger (16) angebracht und von diesem in einem vorbestimmten Abstand (J) in einer Richtung senkrecht zur Drehachse (3) des Aggregats (1) mittels eines vorgespannten elastischen Organs (20) mit grosser Flexibilität entfernt gehalten ist, dessen eines Ende fest mit dem Träger (16) verbunden ist, in bezug auf den das Halteelement (18) beweglich angebracht ist.

2. Vorrichtung nach Anspruch 1, bei der das Antriebsaggregat (1) mittels eines Trägers (6) aufgehängt ist, der auf einer elastischen Unterlage (7) mit grosser Flexibilität aufliegend, von der Tragkonstruktion (5) getragen, angeordnet ist, dadurch gekennzeichnet, dass einer (12) der Anschläge (11, 12), z.B. der Vorwärtsgang-Anschlag (12), auf einem Halteelement (18) befestigt ist, das fest mit einer den Träger (16) durchquerenden Schraube (19) verbunden ist und das elastisch zu dem dem Anschlag (12) gegenüberliegenden Halteelement (26) hin durch eine, das elastische Organ bildende vorgespannte Feder (20) beansprucht ist, deren eines Ende an der Tragkonstruktion (5) befestigt ist und die bestrebt ist, normalerweise das Halteelement (18) entfernt vom Träger (16) in einem Abstand zu halten, der im wesentlichen gleich dem vorgenannten Abstand (J) ist.

3. Vorrichtung nach Anspruch 2, dadurch gekennzeichnet, dass elastische Klemmen (25) auf der zum Träger (16) gewandten Seite des Halteelements (18) des Anschlags (12) mit dem vorgenannten Abstand (J) zwischen diesen Klemmen (25) und dem Träger (16) befestigt sind und eine Mutter (21) auf der Schraube (19) zwischen der Feder (20) und dem Träger (16) angebracht ist, auf dem eine elastische Scheibe (24) derart befestigt ist, dass die Mutter (21) durch die vorgespannte Feder (20) auf dem Träger (16) aufgelegt ist, solange die von dem Anschlag (12) gehaltene Kippbeanspruchung kleiner als die Vorspannkraft der Feder (20) ist.

4. Vorrichtung nach einem der Ansprüche 2 und 3, dadurch gekennzeichnet, dass das elastische vorgespannte Organ eine Blattfeder ist.

5. Vorrichtung nach Anspruch 1, dadurch gekennzeichnet, dass das elastische vorgespannte Organ (47) mit grosser Flexibilität eine in Haarnadelform umgebogene Blattfeder ist, deren einer Schenkel (48) auf einem (30) der Träger (30, 34) befestigt ist, und deren anderer Schenkel (46) ein Halteelement des einen der Anschläge (35, 36), z.B. des Vorwärtsgang-Anschlags (36), bildet, und ein Verankerungsorgan (49) die Annäherung der beiden Schenkel (46, 48) der Feder (47) sicherstellt, um die Vorspannung zu erzeugen, wobei das Halteelement (46) in einem vorbestimmten Abstand (J) seines Trägers (30) gehalten ist.

6. Vorrichtung nach Anspruch 5, dadurch gekennzeichnet, dass der Träger, auf dem die vorgespannte Feder (47) befestigt ist, derjenige (30) ist, der fest mit dem Antriebsaggregat verbunden ist.

7. Vorrichtung nach Anspruch 5, dadurch gekennzeichnet, dass das Verankerungsorgan (49) eine Hülse (51) umfasst, die auf dem das Halteelement des zugeordneten Anschlags (36) bildenden Schenkel (46) befestigt ist und die frei den zweiten Schenkel (48) der Feder (47) durchquert, wobei diese Hülse (51) mit einer Anhalteschulter (54) versehen ist, die auf dem zweiten Schenkel (48) Auflager nimmt und die im Auflager auf diesem letzteren durch die elastische Vorspannung der Feder (47) gehalten ist.

## Claims

1. An anti-tilt device for a motor-drive unit (1) of a motor vehicle elastically suspended from the structure (5) of the vehicle, comprising reverse speed and forward speed abutments (11, 12) of low flexibility, interposed in a direction perpendicular to the axis of rotation (3) of the unit, each between two bearing elements (13, 17, 18, 26), of which one (17, 26) is connected to a support (6) which is part of the motor-drive unit (1) and the other (13, 18) is connected to a support (16) which is part of the structure (5), characterised in that one (18) of the bearing elements of at least one (12) of the abutments (11, 12) is mounted to be movable relative to its support (16) and maintained spaced from the latter by a given distance (J) in a direction perpendicular to the axis of rotation (3) of the unit (1) by means of a pre-stressed elastically yieldable element (20) of high flexibility of which one end is connected to the support (16) relative to which said bearing element (18) is movably mounted.

2. A device according to claim 1, wherein the motor-drive unit (1) is suspended by a support (6) which is placed in bearing relation to an elastically yieldable highly flexible block (7) supported by the structure (5), characterised in that one (12) of the abutments (11, 12), for example the forward speed abutment (12), is fixed on a bearing element (18) connected to a screw (19) extending through the support (16) and elastically biased toward the opposite bearing element (26) of the abutment (12) by a pre-stressed spring (20) constituting said elastically yieldable element of which one end is fixed to the structure (5) and which tends normally to maintain the bearing element (18) spaced from the support (16) by a distance substantially equal to said distance (J).

3. A device according to claim 2, characterised in that elastically yieldable studs (25) are fixed to the side of the bearing element (18) of the abutment (12) facing toward the support (16) with, between these studs (25) and said support (16), said distance (J), and a nut (21) is mounted on the screw (19) between the spring (20) and the support (16) on which is fixed an elastically yieldable washer (24) so that the nut (21) is applied against the support (16) by the pre-stressed spring (20) as long as the tilting force supported by the abutment (12) is less than the force of the pre-stressing of the spring (20).

4. A device according to claim 2 or 3, characterised in that said pre-stressed elastically yieldable element is a spring strip.

5. A device according to claim 1, characterised in that the pre-stressed elastically yieldable element (47) of high flexibility is a spring strip bent in the shape of a hairpin of which one branch (48) is fixed to one (30) of the supports (30, 34) and the other branch (46) constitutes a bearing element of one of the abutments (35, 36), for example the forward speed abutment (36), and a spacer element (49) ensures that the two branches (46, 48) of the spring (47) are brought closer together to produce the pre-stressing, said bearing element (46) being maintained at the predetermined distance (J) from its support (30).

6. A device according to claim 5, characterised in that the support on which the pre-stressed spring (47) is fixed is that (30) which is connected to the motor-drive unit.

7. A device according to claim 5, characterised in that the spacer element (49) comprises a sleeve (51) fixed to the branch (46) forming the bearing element of the associated abutment (36) and freely extending through the second branch (48) of the spring (47), this sleeve (59) being provided with a stop shoulder (54) bearing against the second branch (48) and maintained in bearing relation to the latter by the elastically yieldable pre-stressing of the spring (47).

FIG.1

FIG.3

FIG.2

0 108 000

FIG.4

FIG.5

11